# EUROPEAN PATENT APPLICATION

(11) **EP 1 394 484 A2**
(43) Date of publication of application: **03.03.2004**
(21) Application number: 03018862.7
(22) Date of filing: 19.08.2003
(51) Int. Cl.: F25B 41/06, F25B 31/00, F25B 49/02, F04B 49/22

(54) **Method for operating a refrigerating cycle and a refrigerating cycle**

(30) Priority: 26.08.2002 JP 2002245291; 25.06.2003 JP 2003181204
(71) Applicant: TGK Co., Ltd., Hachioji-shi, Tokyo 193-0942 (JP)
(72) Inventor: Hirota, Hisatoshi, Tokyo 193-0942 (JP)
(74) Representative: Grünecker, Kinkeldey, Stockmair & Schwanhäusser Anwaltssozietät

(57) **Abstract**

An electronic expansion valve (3) of a refrigeration cycle is controlled such that during normal operation, refrigerant is always in a superheated state at the outlet of an evaporator (4). Then the refrigerant is periodically forced by a superheat control device (6) to have negative superheat for a predetermined time. During normal operation, the refrigerant sucked into the variable displacement compressor (1) always has superheat. The refrigeration cycle operates with a high coefficient of performance. The engine driving the compressor (1) operates at high fuel efficiency. The refrigerant is temporarily controlled so as to have negative superheat. Then lubricating oil retained in the evaporator (4) flows into the compressor (1), preventing that the compressor (1) suffers from seizing due to oil shortage.

## Description

The present invention relates to a method for operating a refrigeration cycle according to the preamble of claim 1, particularly for use in an automotive air conditioning system, and a refrigerating cycle according to the preamble of claim 18.

In conventional automotive air conditioning systems the compressor continuously varies the displacement so that even if the rotational speed of the driving engine varies, the flow rate in the refrigeration cycle can be kept at a predetermined value corresponding to a cooling load.

In a known swash plate type variable displacement compressor the swash plate inclination angle is varied by controlling the pressure in the crank chamber, to vary the stroke of pistons coupled to the swash plate and to vary the displacement.

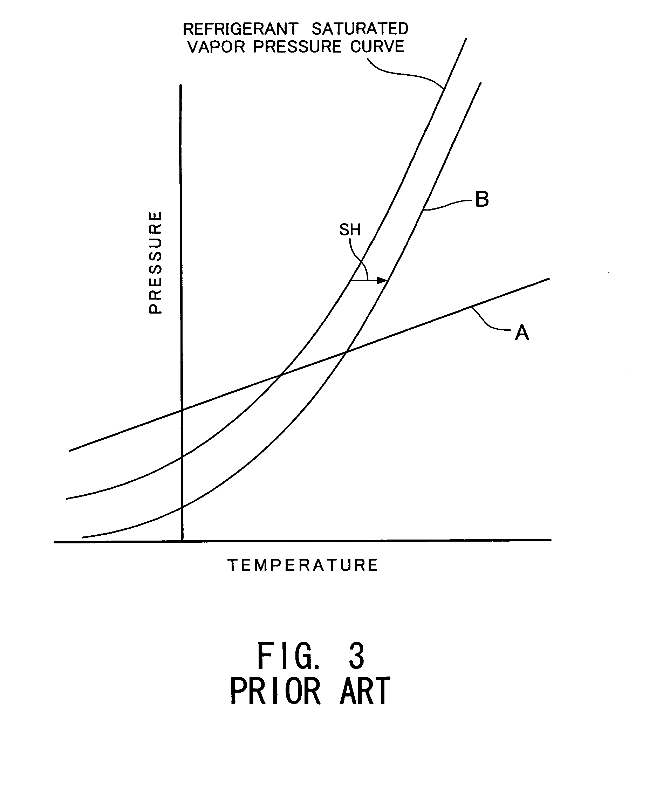

The pressure in the crank chamber is controlled by a capacity control valve in response to the suction pressure of the compressor. The capacity control valve controls the crank chamber pressure by means of discharged refrigerant. If the load decreases and the suction pressure drops below a set pressure, the capacity control valve opens wide, thereby increasing the pressure in the crank chamber. As the differential pressure between the crank chamber pressure and the suction pressure increases, the swash plate inclination angle becomes smaller. The piston strokes decrease, so that as well the displacement decreases. Consequently, the suction pressure is controlled to the set pressure. The air outlet temperature of the evaporator can be kept constant. In the provided cross charged thermostatic expansion valve the pressure in the temperature sensing tube varies by a gradient gentler than that of the curve of saturated vapor pressure of the refrigerant used in the refrigeration cycle itself, as indicated by A in Fig. 3 showing characteristics of thermostatic expansion valves.

The pressure in the temperature sensing tube of the cross charged thermostatic expansion valve is higher during low-load operation when the outlet temperature of the evaporator is low than according to the refrigerant saturated vapor pressure curve. The cross charged expansion valve remains open and does not respond to the outlet pressure of the evaporator. Accordingly, the control of the expansion valve does not come into conflict with the control of the variable displacement compressor whose suction pressure nearly equal to the outlet pressure of the evaporator is controlled to a constant value in a variable displacement range, thus enabling stable control free of hunting.

Since the cross charged expansion valve remains open during a low-load operation, the refrigerant at the evaporator outlet is not completely evaporated, but still contains liquid, when returned to the compressor. During high-load operation, on the other hand, the flow rate is high, and therefore, a large amount of lubricating oil contained in the refrigerant is circulated. Although during low-load operation the compressor operates with small displacement, the refrigerant containing liquid is returned to the compressor, and accordingly, sufficient circulation of lubricating oil is ensured despite a low flow rate, thus preventing the compressor from seizing due to a shortage of oil.

Besides the known constant suction pressure type variable displacement compressor, a flow rate control type variable displacement compressor is known in which the discharge flow rate is controlled to a constant value. There the cross charged thermostatic expansion valve is used to achieve stable control and to ensure sufficient oil circulation during low-load operation. However, then liquid refrigerant returns from the evaporator to the compressor during low-load operation. Consequently, the compressor has to evaporate the liquid, with the result that the coefficient of performance of the refrigeration cycle lowers, deteriorating the fuel efficiency of the automobile.

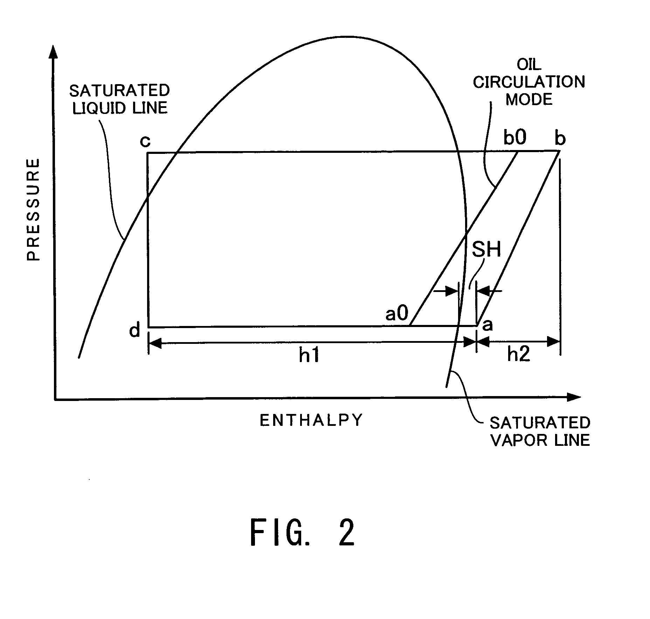

Another known refrigeration cycle comprises a normally charged thermostatic expansion valve whose characteristic is indicated at B in Fig. 3, in combination with a flow rate control type variable displacement compressor as disclosed e.g. in JP-A-2001-133053, (Figs. 2 and 3). With the normally charged thermostatic expansion valve, the refrigerant at the outlet of the evaporator always has a higher temperature, or superheat SH, than the curve of saturated vapor pressure of the refrigerant used in the refrigeration cycle, whereby the coefficient of performance improves. Although the use of the normally charged thermostatic expansion valve leads to a reduction of the amount of circulating lubricating oil, the flow rate control type variable displacement compressor controls the refrigerant flow rate so as not to drop below a minimum flow rate to ensure enough oil for the compressor, and to prevent the compressor seizing due to a shortage of oil.

In the known refrigeration cycle using the flow rate control type variable displacement compressor and the normally charged thermostatic expansion valve, the liquid refrigerant that entered the evaporator is evaporated and the resulting superheated gaseous refrigerant leaves the evaporator. However, the lubricating oil carried with the liquid refrigerant is not completely evaporated and partly remains in the evaporator. Thus, if the refrigeration cycle is operated for a long time in a state such that the refrigerant leaving the evaporator is superheated, the lubricating oil stays in the evaporator and the circulating oil runs short, giving rise to a problem that the variable displacement compressor is eventually damaged due to shortage of oil.

It is an object of the invention to provide a method for operating a refrigeration cycle and a refrigeration cycle which are capable of preventing oil from staying in the evaporator, and ensure a high coefficient of performance as well as sufficient circulation of oil.

This object is achieved by the features of claim 1 and of claim 18.

During normal operation, the refrigeration cycle is controlled such that the refrigerant always has superheat at the outlet of the evaporator, to allow the compressor to always suck in sufficiently evaporated and superheated refrigerant, thereby operating the refrigeration cycle with a high coefficient of performance. Furthermore, however, the refrigeration cycle is periodically controlled such that the superheat of the refrigerant at the outlet of the evaporator is forcibly eliminated for a predetermined time, to allow the compressor to suck in wet or liquid refrigerant. Consequently, lubricating oil stayed in the evaporator is caused to flow out and is returned to the compressor without fail. While the refrigeration cycle periodically is controlled to forcibly eliminate the superheat, that is, it generates negative superheat for a predetermined time. During normal operation, therefore, the refrigeration cycle can operate with high coefficient of performance, whereby the engine driving the compressor operates at high fuel efficiency. In the operational phase with negative superheat lubricating oil held back in the evaporator in forced to flow into the compressor,

Embodiments of the invention will be described with reference to the drawings.
Fig. 1 is a system diagram of the configuration of a refrigeration cycle,
Fig. 2 is a Mollier diagram showing states of refrigerant in the refrigeration cycle,
Fig. 3 is a diagram showing characteristics of thermo-static expansion valves.

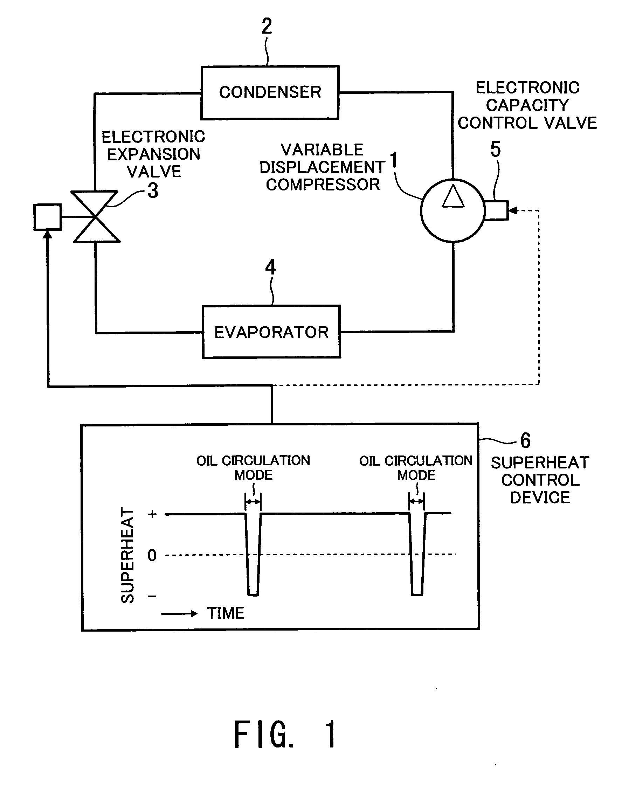

A refrigeration cycle in Fig. 1 comprises a variable displacement compressor 1, a condenser 2, an electronic expansion valve 3 for adiabatically expanding condensed refrigerant, and an evaporator 4 for evaporating the adiabatically expanded refrigerant. The compressor 1 comprises an electronic capacity control valve 5 for controlling the discharging capacity. A superheat control device 6 is connected to the electronic expansion valve 3.

The Mollier diagram in Fig. 2 shows the states of the refrigerant in the compressor 1, the condenser 2, the electronic expansion valve 3 and the evaporator 4. Ordinate and abscissa axes indicate absolute pressure and enthalpy, respectively.

The refrigeration cycle operates along a line a-b-c-d-a in the Mollier diagram. The compressor 1 compresses the gaseous refrigerant evaporated by the evaporator 4 (a→b). The resulting gaseous refrigerant whose temperature and pressure have risen due to the compression is condensed by the condenser 2 (b→c). The condensed and thus liquefied refrigerant is adiabatically expanded by the electronic expansion valve 3 (c→d), and the resulting refrigerant which has turned into a gas-liquid, two-phase refrigerant due to the adiabatic expansion is evaporated by the evaporator 4 (d→a). In the evaporator 4, the refrigerant absorbs latent heat of vaporization from the air for or from the passenger compartment and cools the air.

The electronic expansion valve 3 is controlled such that the refrigerant at the outlet of the evaporator 4 has predetermined superheat SH exceeding the saturated vapor line, like a normally charged thermostatic expansion valve. The superheated refrigerant can always be supplied to the compressor 1. Consequently, the coefficient of performance is improved and the load on the engine driving the compressor 1 is only moderate, so that the fuel efficiency improves. The coefficient of performance is expressed as the ratio of the refrigerating capacity to the thermal equivalent of the required work of compression.

Coefficient of Performance = Refrigerating Capacity/Thermal Equivalent of Work of Compression ···(1)

The refrigerating capacity corresponds, on the Mollier diagram in Fig. 2, to the width h1 between a state (point d) of the refrigerant in which the refrigerant is a mixture of liquid and vapor present in the evaporator 4 and a state (point a) in which the refrigerant is superheated. The thermal equivalent of the work of compression corresponds to a width h2 between the point a at which the refrigerant is superheated and the point b at which the refrigerant has been compressed by the compressor 1. Accordingly, the higher the refrigerating capacity (h1) of the evaporator 4 and the smaller the compression work (h2) of the compressor 1 are, the higher the coefficient of performance of the refrigeration cycle becomes. In this instance, the coefficient of performance of the refrigeration cycle is improved by controlling the electronic expansion valve 3 such that the refrigerant always has the predetermined superheat SH at the outlet of the evaporator 4.

When the refrigeration cycle operates such that the refrigerant is always in a superheated state at the outlet of the evaporator 4, lubricating oil for the compressor 1 is gradually retained in the evaporator 4. According to the present invention, therefore, the superheat control device 6 periodically forcibly operates the refrigeration cycle in an oil circulation mode for a predetermined time.

Specifically, the superheat control device 6 controls the electronic expansion valve 3 so as to forcibly eliminate the superheat of the refrigerant at the outlet of the evaporator 4. In practice, the superheat control device 6 controls the electronic expansion valve 3 such that the refrigerant temporarily has negative superheat. This can be done because the electronic expansion valve 3 permits free setting of its characteristics. Such control cannot be achieved with a normally charged thermostatic expansion valve since it controls the refrigerant so as to always have preset superheat. In consequence, the state of the refrigerant at the outlet of the evaporator 4 then shifts to a point a0 on the Mollier diagram in Fig. 2, and the compressor 1 compresses a mixture of liquid and vapor, up to a point b0 on the Mollier diagram. During the oil circulation mode, the coefficient of performance of the refrigeration cycle temporarily lowers. However, since the compressor 1 is allowed to suck in sufficiently wet refrigerant for a short period of time, not only a sufficient amount of lubricating oil can be supplied to the compressor 1 but also the lubricating oil first retained in the evaporator 4 then can be brought into the compressor 1.

The intervals of the oil circulation mode may be varied in accordance with the refrigeration load. For example, when the refrigeration load is small, the intervals may be set longer, and when the refrigeration load is large, the intervals may be set shorter.

First, in the case where the compressor 1 is a constant differential pressure control type in which a differential pressure between the discharge and suction pressures is controlled to a constant value by the electronic capacity control valve 5, an expansion valve of constant flow rate control type is used as the electronic expansion valve 3 which controls the flow rate to a constant value, in order that the control of the electronic expansion valve may not conflict with the control of the electronic capacity control valve 5.

For the oil circulation mode, the superheat control device 6 sets the constant flow rate control type electronic expansion valve 3 so as to temporarily increase the flow rate. The flow rate through the electronic expansion valve 3 suddenly increases. The evaporator 4 supplies the compressor 1 with refrigerant which is not completely evaporated, but is sufficiently wet. At the same time, retained lubricating oil flows out. This is equivalent to a control by the superheat control device 6 such that the refrigerant has negative superheat at the outlet of the evaporator 4.

When the compressor 1 is a constant differential pressure control type, and the electronic expansion valve 3 is a constant flow rate control type, the superheat control device 6 may alternatively set the electronic capacity control valve 5 in the oil circulation mode so as to temporarily decrease the differential pressure, as indicated by the broken line in Fig. 1. Setting the differential pressure between the discharge and suction pressures of the compressor 1 to a smaller value means increasing the flow rate. The flow rate of refrigerant sucked into the compressor 1 suddenly increases. The compressor 1 receives wet refrigerant and also draws out the retained lubricating oil from the evaporator 4.

When the compressor 1 is a constant differential pressure control type and the electronic expansion valve 3 is a constant flow rate control type, the superheat control device 6 may simultaneously control the electronic expansion valve 3 and the electronic capacity control valve 5. Namely, the superheat control device 6 may set the electronic expansion valve 3 so as to increase the flow rate and at the same time set the electronic capacity control valve 5 so as to decrease the differential pressure.

The electronic capacity control valve 5 may be a proportional control valve capable of varying the cross-sectional area of a discharge-side refrigerant passage and also a constant differential pressure valve for controlling a differential pressure between the inlet and outlet sides of the proportional control valve to a constant value. The compressor 1 is a flow rate control type in which the discharge flow rate of the refrigerant is controlled to a constant value. In this case, a constant differential pressure control type electronic expansion valve capable of controlling the differential pressure between the inlet and outlet sides to a constant value is used as the electronic expansion valve 3 so that the control of the electronic expansion valve 3 may not conflict with the control of the electronic capacity control valve 5.

In the oil circulation mode, the superheat control device 6 sets the constant differential pressure control type electronic expansion valve 3 so as to decrease the differential pressure between the inlet and outlet sides. This means controlling the electronic expansion valve 3 to increase the refrigerant flow rate, whereby the wet state refrigerant suddenly is supplied from the evaporator 4 to the compressor 1. Lubricating oil retained in the evaporator 4 also is drawn out together with the refrigerant. This is equivalent to a control of the refrigerant by the superheat control device 6 such that the refrigerant has negative superheat at the outlet of the evaporator 4.

When the compressor 1 is a flow rate control type and the electronic expansion valve 3 is a constant differential pressure control type, the superheat control device 6 may alternatively set the proportional control valve constituting the electronic capacity control valve 5 so as to increase the discharge flow rate during the oil circulation mode, as indicated by the broken line in Fig. 1. This rapidly increases the flow rate into the compressor.

When the compressor 1 is a flow rate control type and the electronic expansion valve 3 is a constant differential pressure control type, the superheat control device 6 may control the electronic expansion valve 3 and the electronic capacity control valve 5 at the same time. Namely, the superheat control device 6 may set the electronic expansion valve 3 so as to decrease the differential pressure between the inlet and outlet sides thereof and at the same time set the proportional control valve of the electronic capacity control valve 5 so as to increase the discharge flow rate.

When the electronic capacity control valve 5 is constituted by a constant differential pressure valve for controlling a differential pressure between the inlet and outlet sides of a fixed orifice arranged in the discharge-side refrigerant passage, the orifice has a fixed cross-sectional area such that the differential pressure is constant. The compressor 1 may be a flow rate control type in which the discharge flow rate of the refrigerant is controlled to a constant value. In this case, a constant differential pressure control type electronic expansion valve capable of controlling a differential pressure between the inlet and outlet sides thereof to a constant value is used as the electronic expansion valve 3 so that the control of the electronic expansion valve 3 may not conflict with that of the electronic capacity control valve 5.

In the oil circulation mode, the superheat control device 6 sets the constant differential pressure control type electronic expansion valve 3 to decrease the differential pressure between the inlet and outlet sides and to increase the refrigerant flow rate. Refrigerant in a wet state is supplied from the evaporator 4 to the compressor 1 and lubricating oil also flows out together with the refrigerant. This is equivalent to a control of the refrigerant by the superheat control device 6 such that the refrigerant has negative superheat at the outlet of the evaporator 4.

When the variable displacement compressor 1 is a flow rate control type and the electronic expansion valve 3 is a constant differential pressure control type, the superheat control device 6 may alternatively set the constant differential pressure valve constituting the electronic capacity control valve 5 so as to decrease the differential pressure between the inlet and outlet sides of the fixed orifice during the oil circulation mode, as indicated by the broken line in Fig. 1. This rapidly increases the flow rate of the refrigerant sucked into the compressor 1.

When the compressor 1 is a flow rate control type and the electronic expansion valve 3 is a constant differential pressure control type, the superheat control device 6 may simultaneously control the electronic expansion valve 3 and the electronic capacity control valve 5. Namely, the superheat control device 6 may set the electronic expansion valve 3 so as to decrease the differential pressure between the inlet and outlet sides thereof and at the same time set the constant differential pressure valve of the electronic capacity control valve 5 so as to decrease the differential pressure between the inlet and outlet sides of the fixed orifice.

According to other control methods the superheat control device 6 controls the electronic capacity control valve 5 of the compressor 1, as indicated by the broken line in Fig. 1.

When the compressor 1 is a constant differential pressure control type and the electronic expansion valve 3 is a constant flow rate control type, the superheat control device 6 first sets the electronic capacity control valve 5 so as to temporarily increase the differential pressure and then to decrease the differential pressure during the oil circulation mode.

Setting the differential pressure between the discharge and suction pressures of the compressor 1 to a larger value means decreasing the refrigerant flow rate. Accordingly, the refrigerating capacity lowers and the evaporating pressure at the suction side rises. Subsequently, the differential pressure between the discharge and suction pressures is set to a smaller value to increase the refrigerant flow rate, so that the refrigerating capacity increases while the evaporating pressure of the suction side drops. In consequence, the refrigerant in the evaporator 4 suddenly boils, whereby the variable displacement compressor 1 sucks in refrigerant together with the lubricating oil.

In this case, a normally charged thermostatic expansion valve may be used in which the refrigerant is controlled so as to always have predetermined superheat SH at the outlet of the evaporator 4, instead of the constant flow rate control type electronic expansion valve 3. When the compressor 1 increases the differential pressure between the discharge and suction pressures, the normally charged thermostatic expansion valve automatically operates in the valve closing direction since the evaporating pressure of the suction side rises. On the other hand, when the compressor 1 decreases the differential pressure between the discharge and suction pressures, the normally charged thermostatic expansion valve automatically operates in the valve opening direction because of a drop in the evaporating pressure of the suction side. Thus, the normally charged thermostatic expansion valve never hinders the operation in the oil circulation mode.

When the compressor 1 is a flow rate control type in which a differential pressure between the inlet and outlet sides of a proportional control valve capable of varying a cross-sectional area thereof is controlled to be constant by a constant differential pressure valve, to thereby control the discharge flow rate of the refrigerant to a constant value, and the electronic expansion valve 3 is a constant differential pressure control type, in the oil circulation mode, the superheat control device 6 first sets the proportional control valve constituting the electronic capacity control valve 5 so as to decrease the discharge flow rate and then to increase the discharge flow rate. First, the compressor 1 decreases the discharge flow rate, whereby the refrigerating capacity lowers and the evaporating pressure of the suction side rises. Subsequently, the discharge flow rate is increased; therefore, the refrigerating capacity increases and the evaporating pressure of the suction side drops. Since the refrigerant in the evaporator 4 boils all at once because of a great drop in the evaporating pressure, the refrigerant can be returned to the variable displacement compressor 1 together with the lubricating oil.

When the compressor 1 is a flow rate control type in which a differential pressure between the inlet and outlet sides of a fixed orifice arranged in the discharge-side refrigerant passage is controlled to be constant by a constant differential pressure valve, to thereby control the discharge flow rate of the refrigerant to a constant value, and the electronic expansion valve 3 is a constant differential pressure control type, in the oil circulation mode, the superheat control device 6 first sets the constant differential pressure valve constituting the electronic capacity control valve 5 so as to increase the differential pressure between the inlet and outlet sides of the fixed orifice and then to decrease the differential pressure. The compressor 1 first increases the differential pressure between the inlet and outlet sides of the fixed orifice. Since the discharge flow rate is thus set to a smaller value, the refrigerating capacity lowers and the evaporating pressure of the suction side rises. Subsequently, the differential pressure between the inlet and outlet sides of the fixed orifice is decreased to thereby increase the discharge flow rate; therefore, the refrigerating capacity suddenly increases while the evaporating pressure of the suction side sharply drops. Since the evaporating pressure undergoes a great drop and the refrigerant in the evaporator 4 boils all at once, the refrigerant can be returned to the variable displacement compressor 1 together with the lubricating oil.

When the flow rate control type compressor 1 is controlled such that the discharge flow rate is once decreased and then increased, a normally charged thermostatic expansion valve may be used in place of the constant differential pressure control type electronic expansion valve 3.

## Claims

1. A method of operating a refrigeration cycle comprising an evaporator (4) and a condenser (2) using an expansion valve (3) and a variable displacement compressor (1) having an electronic capacity control valve (5), **characterized in that**
during normal operation, the refrigeration cycle is controlled such that refrigerant always has superheat at the outlet of the evaporator (4), and
that the refrigeration cycle is periodically operated in oil an circulation mode for a predetermined time, the oil circulation mode being a mode in which the refrigeration cycle is controlled such that the superheat of the refrigerant at the outlet of the evaporator (4) is forcibly eliminated by at least one of the electronic capacity control valve (5) and the expansion valve (3).

2. Method as in claim 1, **characterized in that** intervals at which the refrigeration cycle is operated in the oil circulation mode are varied in accordance with a refrigeration load.

3. Method as in claim 1, **characterized in that** the variable displacement compressor (1) is a constant differential pressure control type in which a differential pressure between discharge and suction pressures is controlled to a constant value by the electronic capacity control valve (5), that the expansion valve (3) is an electronic expansion valve of constant flow rate control type which controls a flow rate of the refrigerant to a constant value, and that in the oil circulation mode the electronic expansion valve (3) is set so as to increase the flow rate.

4. Method as in claim 1, **characterized in that** the variable displacement compressor (1) is a constant differential pressure control type in which a differential pressure between discharge and suction pressures is controlled to a constant value by the electronic capacity control valve (5), that the expansion valve (3) is an electronic expansion valve of constant flow rate control type which controls a flow rate of the refrigerant to a constant value, and that in the oil circulation mode the electronic capacity control valve (5) is set so as to decrease the differential pressure.

5. Method as in claim 1, **characterized in that** the variable displacement compressor (1) is a constant differential pressure control type in which a differential pressure between discharge and suction pressures is controlled to a constant value by the electronic capacity control valve (5), that the expansion valve (3) is an electronic expansion valve of constant flow rate control type which controls a flow rate of the refrigerant to a constant value, and that in the oil circulation mode the electronic expansion valve (3) is set so as to increase the flow rate of the refrigerant and simultaneously the electronic capacity control valve (5) is set so as to decrease the differential pressure.

6. Method as in claim 1, **characterized in that** the variable displacement compressor (1) is a constant differential pressure control type in which a differential pressure between discharge and suction pressures is controlled to a constant value by the electronic capacity control valve (5), that the expansion valve (3) is an electronic expansion valve of constant flow rate control type which controls a flow rate of the refrigerant to a constant value, and that in the oil circulation mode the electronic capacity control valve (5) is first set so as to increase the differential pressure and then is set to decrease the differential pressure.

7. Method as in claim 1, **characterized in that** the variable displacement compressor (1) is a flow rate control type in which a discharge flow rate of the refrigerant is controlled to a constant value and of which the electronic capacity control valve (5) is constituted by a proportional control valve capable of varying a cross-sectional area of a discharge-side refrigerant passage and by a constant differential pressure valve for controlling a differential pressure between inlet and outlet sides of the proportional control valve to a constant value, that the expansion valve (3) is an electronic expansion valve of constant differential pressure control type in which a differential pressure between inlet and outlet sides is controlled to a constant value, and that in the oil circulation mode the electronic expansion valve (3) is set so as to decrease the differential pressure.

8. Method as in claim 1, **characterized in that** the variable displacement compressor (1) is a flow rate control type in which a discharge flow rate of the refrigerant is controlled to a constant value and of which the electronic capacity control valve (5) is constituted by a proportional control valve capable of varying a cross-sectional area of a discharge-side refrigerant passage and by a constant differential pressure valve for controlling a differential pressure between inlet and outlet sides of the proportional control valve to a constant value, that the expansion valve (3) is an electronic expansion valve of constant differential pressure control type in which a differential pressure between inlet and outlet sides thereof is controlled to a constant value, and that in the oil circulation mode the proportional control valve is set so as to increase the discharge flow rate.

9. Method as in claim 1, **characterized in that** the variable displacement compressor (1) is a flow rate control type in which a discharge flow rate of the refrigerant is controlled to a constant value and of which the electronic capacity control valve (5) is constituted by a proportional control valve capable of varying a cross-sectional area of a discharge-side refrigerant passage and by a constant differential pressure valve for controlling a differential pressure between inlet and outlet sides of the proportional control valve to a constant value, that the expansion valve (3) is an electronic expansion valve of constant differential pressure control type in which a differential pressure between inlet and outlet sides thereof is controlled to a constant value, and that in the oil circulation mode the electronic expansion valve (3) is set so as to decrease the differential pressure and that simultaneously the proportional control valve is set so as to increase the discharge flow rate.

10. Method as in claim 1, **characterized in that** the variable displacement compressor (1) is a flow rate control type in which a discharge flow rate of the refrigerant is controlled to a constant value and of which the electronic capacity control valve (5) is constituted by a proportional control valve capable of varying a cross-sectional area of a discharge-side refrigerant passage and by a constant differential pressure valve for controlling a differential pressure between inlet and outlet sides of the proportional control valve to a constant value, that the expansion valve (3) is an electronic expansion valve of constant differential pressure control type in which a differential pressure between inlet and outlet sides thereof is controlled to a constant value, and that in the oil circulation mode the proportional control valve is first set so as to decrease the discharge flow rate and then is set to increase the discharge flow rate.

11. Method as in claim 1, **characterized in that** the variable displacement compressor (1) is a flow rate control type in which a discharge flow rate of the refrigerant is controlled to a constant value and of which the electronic capacity control valve (5) is constituted by a constant differential pressure valve for controlling a first differential pressure between inlet and outlet sides of a fixed orifice arranged in a discharge-side refrigerant passage and having a fixed cross-sectional area such that the first differential pressure is constant, that the expansion valve (3) is an electronic expansion valve of constant differential pressure control type in which a second differential pressure between inlet and outlet sides thereof is controlled to a constant value, and that in the oil circulation mode the electronic expansion valve (3) is set so as to decrease the second differential pressure.

12. Method as in claim 1, **characterized in that** the variable displacement compressor (1) is a flow rate control type in which a discharge flow rate of the refrigerant is controlled to a constant value and of which the electronic capacity control valve (5) is constituted by a constant differential pressure valve for controlling a first differential pressure between inlet and outlet sides of a fixed orifice arranged in a discharge-side refrigerant passage and having a fixed cross-sectional area such that the first differential pressure is constant, that the expansion valve (3) is an electronic expansion valve of constant differential pressure control type in which a second differential pressure between inlet and outlet sides thereof is controlled to a constant value, and that in the oil circulation mode the constant differential pressure valve constituting the electronic capacity control valve (5) is set so as to decrease the first differential pressure.

13. Method as in claim 1, **characterized in that** the variable displacement compressor (1) is a flow rate control type in which a discharge flow rate of the refrigerant is controlled to a constant value and of which the electronic capacity control valve (5) is constituted by a constant differential pressure valve for controlling a first differential pressure between inlet and outlet sides of a fixed orifice arranged in a discharge-side refrigerant passage and having a fixed cross-sectional area such that the first differential pressure is constant, that the expansion valve (3) is an electronic expansion valve of constant differential pressure control type in which a second differential pressure between inlet and outlet sides thereof is controlled to a constant value, and that in the oil circulation mode the electronic expansion valve (3) is set so as to decrease the second differential pressure and simultaneously the constant differential pressure valve constituting the electronic capacity control valve (5) is set so as to decrease the first differential pressure.

14. Method as in claim 1, **characterized in that** the variable displacement compressor (1) is a flow rate control type in which a discharge flow rate of the refrigerant is controlled to a constant value and of which the electronic capacity control valve (5) is constituted by a constant differential pressure valve for controlling a first differential pressure between inlet and outlet sides of a fixed orifice arranged in a discharge-side refrigerant passage and having a fixed cross-sectional area such that the first differential pressure is constant, that the expansion valve (3) is an electronic expansion valve of constant differential pressure control type in which a second differential pressure between inlet and outlet sides thereof is controlled to a constant value, and that in the oil circulation mode the constant differential pressure valve constituting the electronic capacity control valve (5) is first set so as to increase the first differential pressure and then to decrease the first differential pressure.

15. Method as in claim 1, **characterized in that** the variable displacement compressor (1) is a constant differential pressure control type in which a differential pressure between discharge and suction pressures thereof is controlled to a constant value by the electronic capacity control valve (5), that the expansion valve (3) is a normally charged thermostatic expansion valve, and that in the oil circulation mode the electronic capacity control valve (5) is first set so as to increase the differential pressure and then to decrease the differential pressure.

16. Method as in claim 1, **characterized in that** the variable displacement compressor (1) is a flow rate control type in which a discharge flow rate of the refrigerant is controlled to a constant value and of which the electronic capacity control valve (5) is constituted by a proportional control valve capable of varying a cross-sectional area of a discharge-side refrigerant passage and by a constant differential pressure valve for controlling a differential pressure between inlet and outlet sides of the proportional control valve to a constant value, that the expansion valve (3) is a normally charged thermostatic expansion valve, and that in the oil circulation mode the proportional control valve is first set so as to decrease the discharge flow rate and then to increase the discharge flow rate.

17. Method as in claim 1, **characterized in that** the variable displacement compressor (1) is a flow rate control type in which a discharge flow rate is controlled to a constant value and of which the electronic capacity control valve (5) is constituted by a constant differential pressure valve for controlling a differential pressure between inlet and outlet sides of a fixed orifice arranged in a discharge-side refrigerant passage and having a fixed cross-sectional area such that the differential pressure is constant, that the expansion valve (3) is a normally charged thermostatic expansion valve, and that in the oil circulation mode the constant differential pressure valve is first set so as to increase the differential pressure and then to decrease the differential pressure.

18. A refrigeration cycle comprising a condenser (2), an evaporator (4), an electronic expansion valve (3) and a variable displacement compressor (1) having an electronic capacity control valve (5), **characterized by**:
a superheat control device (6) for controlling at least one of the electronic capacity control valve (5) and the electronic expansion valve (3) in a manner such that while refrigerant is controlled so as to always have superheat at the outlet of the evaporator (4), the superheat of the refrigerant at the outlet of the evaporator (4) is periodically forcibly eliminated for a predetermined time.
